# EUROPÄISCHE PATENTSCHRIFT

(11) **EP 1 147 749 B1**
(45) Veröffentlichungstag und Bekanntmachung des Hinweises auf die Patenterteilung: **23.11.2005**
(21) Anmeldenummer: 01109112.1
(22) Anmeldetag: 12.04.2001
(51) Int. Cl.: A61C 15/00, A61C 19/02, A61C 15/02, A47K 1/09

(54) **Vorrichtung zum Darbieten von Gerätschaften der Dentalhygiene**
Device for presenting tools for dental care
Dispositif pour présenter des outils de soin dentaire

(30) Priorität: 14.04.2000 DE 10018449
(43) Veröffentlichungstag der Anmeldung: 24.10.2001
(73) Patentinhaber: Top Caredent AG, 8047 Zürich (CH)
(72) Erfinder: Stieger, Peter, Dr. med. med. dent., 9000 St. Gallen (CH); Spagnolo-Stieger, Susanne, 1196 Gland (FR); Bättig, Curt, Adliswi/Zürich (CH)
(74) Vertreter: Weiss, Peter

(56) Entgegenhaltungen:
- US-A- 3 363 275
- US-A- 5 358 112

## Beschreibung

Die vorliegende Erfindung betrifft eine Vorrichtung zum Darbieten von Gerätschaften der Dentalhygiene, insbesondere von Pflegegerätschaften für die interdentale Hygiene in einem Grundgestell.

Gerätschaften der Dentalhygiene liegen normalerweise in Schubladen, Besteckkästen od. dgl. ungeordnet herum. Für den Zahnarzt bedeutet dies jedes Mal einen erheblichen Aufwand, wenn er bestimmte Gerätschaften sucht. Ferner ist die Hygiene derartiger Gerätschaften vermindert. Beispielsweise zeigt die US 5,358,112 ein Grundgestell zum Darbieten von verschiedenenen Dentalbohrern.

In der Vergangenheit hat sich herausgestellt, dass insbesondere auch die Zahnzwischenräume gereinigt werden sollten, um erfolgreich Karies zu verhindern. Zu diesem Zweck wurden sogenannte interdentale Zahnbürsten entwickelt, wobei an einem Draht kurze Borsten allseits abstehend angeordnet sind. Der Draht befindet sich an einem entsprechenden Halter. Der Zahnarzt oder aber auch der Benutzer bei der morgendlichen und abendlichen Mundhygiene sucht dann mit dem Draht die Zahnzwischenräume und versucht, zwischen zwei Zähne zu gelangen, um diese Zahnzwischenräume zu reinigen. Nachteilig ist dabei jedoch, dass die Zahnzwischenräume bei den Menschen sehr verschieden sind. Meist wird jedoch nur eine Grösse einer interdentalen Zahnbürste angeboten. Das gleiche Problem hat auch der Zahnarzt, wenn er die Zahnzwischenräume des Patienten reinigt.

Der vorliegenden Erfindung liegt die Aufgabe zugrunde, eine Vorrichtung der o. g. Art zu entwickeln, mittels welcher sowohl durch den Zahnarzt, als auch durch den Benutzer selbst auf einfachste Weise die Gerätschaft gewählt werden kann, welche für die durchzuführende dentale Hygiene notwendig ist.

Zur Lösung dieser Aufgabe führt, dass auf dem Grundgestell ein Aufsatz angeordnet ist, welcher eine Mehrzahl unterschiedlicher Bürsten trägt und der austauschbar auf dem Grundgestell angeordnet ist.

Die Erfindung entwickelt ein Ordnungssystem, welches insbesondere dem Zahnarzt sein Arbeiten bei der Mundhygiene des Patienten erheblich erleichtert. Dem Zahnarzt wird eine Mehrzahl von Bürsten dargeboten, so dass er diejenige wählen bzw. aussuchen kann, welche gerade für den Patienten am geeignetsten erscheinen. Die Erfindung bietet somit dem Zahnarzt das interdentale Arbeitsmaterial kompakt, geordnet und funktionell in Reichweite an.

zum zwecke der Austauschbarkeit besitzt der Aufsatz Steckfüsse, die in entsprechende Stecklöcher in einer Schrägplatte eingreifen. Das bedeutet, dass, sofern bspw. der Aufsatz leer ist, er ohne Schwierigkeiten durch einen neuen, bereits bestückten Aufsatz ersetzt werden kann. Ferner erleichtert die Zerlegbarkeit der Vorrichtung, wozu auch das Entfernen des Aufsatzes gehört, die Reinigung bzw. Desinfektion.

Ein weiteres Merkmal der Erfindung bezieht sich darauf, dass Bürsten unterschiedlicher Dicke angeboten werden. Dies bezieht sich einmal auf die Drahtdicke und/oder aber auch auf die Dicke der Borsten bzw. die Länge der Borsten. Erfindungsgemäss sollen in der Vorrichtung eine Mehrzahl von unterschiedlichen Bürsten angeboten werden, die für unterschiedlichste Zahnlücken geeignet sind. Ferner sollen diese Bürsten auch unterschiedlich eingefärbt sein, so dass der Zahnarzt immer für den Patienten die geeignete Bürste herausfindet. Die Einfärbung kann sich auf den Draht und/oder die Borsten beziehen.

Damit der Patient aber auch zu Hause die interdentale Pflege fortsetzen kann, bietet die Vorrichtung bereits Griffe an, in welche die Drahtbürsten eingesteckt werden können. D. h., der Zahnarzt kann dem Patienten einen Griff seiner Färbung und ein Päckchen mit dazugehörigen Drahtbürsten mit nach Hause geben. Damit ist gewährleistet, dass der Patient auch zu Hause die interdentale Mundhygiene fortsetzt. Hierdurch wird ein wesentlicher Schritt zur verbesserten Zahnpflege getan.

In einem bevorzugten Ausführungsbeispiel befindet sich unterhalb der Schrägplatte, welche den Aufsatz trägt, ein Fach, in das eine Schale für dentales Besteck eingeschoben werden kann. Bevorzugt soll dieses Besteck alle dentalen Instrumente umfassen, welche für die Mundhygiene gebraucht werden. Sobald der Zahnarzt ein bestimmtes Instrument benötigt, braucht er die Schale nur aus dem Fach zu ziehen und hat so einen schnellen Zugriff zu dem gewünschten Instrument.

Insgesamt wird das Grundgestell bzw. der Aufsatz mit den Bürsten von einem Deckel abgedeckt. Dieser Deckel dreht um ein Scharnier, so dass er ohne Schwierigkeit von dem Grundgestell abgehoben werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht einer erfindungsgemässen Vorrichtung zum Darbieten von Gerätschaften der Dentalhygiene;
Figur 2 eine Seitenansicht der Vorrichtung gemäss Figur 1;
Figur 3 eine Draufsicht auf ein Grundgestell der Vorrichtung gemäss Figur 1 mit angehängtem Deckel;
Figur 4 eine Draufsicht auf eine Besteckschale;
Figur 5 eine Draufsicht auf einen Aufsatz zum Aufsetzen auf das Grundgestell gemäss Figur 3.

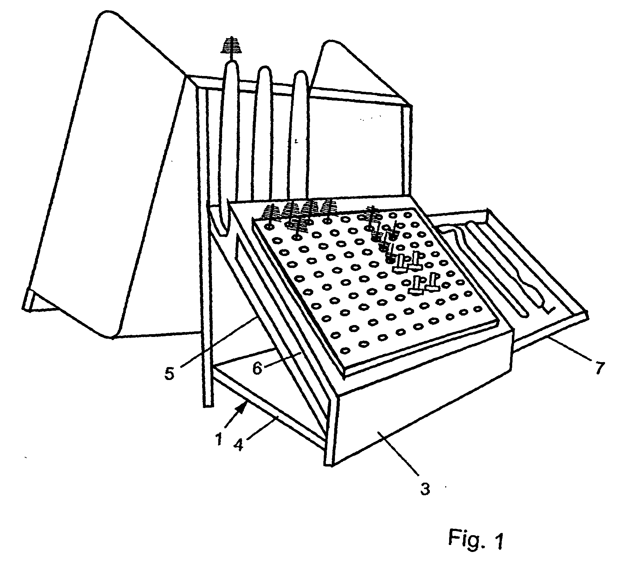

Eine Vorrichtung zum Darbieten von Gerätschaften der Dentalhygiene weist gemäss den Figuren 1 bis 3 ein Grundgestell 1 auf, welches eine Rückwand 2 und eine Frontwand 3 besitzt. Rückwand 2 und Frontwand 3 werden durch einen Boden 4 miteinander verbunden.

Von der Frontwand 3 erstreckt sich oberhalb des Bodens 4 eine Zwischenplatte 5 zur Rückwand 2, wobei die Zwischenplatte 5 schräg geneigt ist. Randseitig besitzt die Zwischenplatte 5 eine Ausnehmung 6, welche den Zugriff zu einer Besteckschale 7 erleichtert.

In einem Abstand zu der Zwischenplatte 5 erstreckt sich von der Frontwand 3 zur Rückwand 2 eine Schrägplatte 8, wobei die Schrägplatte 8 zur Rückwand 2 hin durch eine S-förmige Ausformung 9 eine Mulde 10 ausbildet.

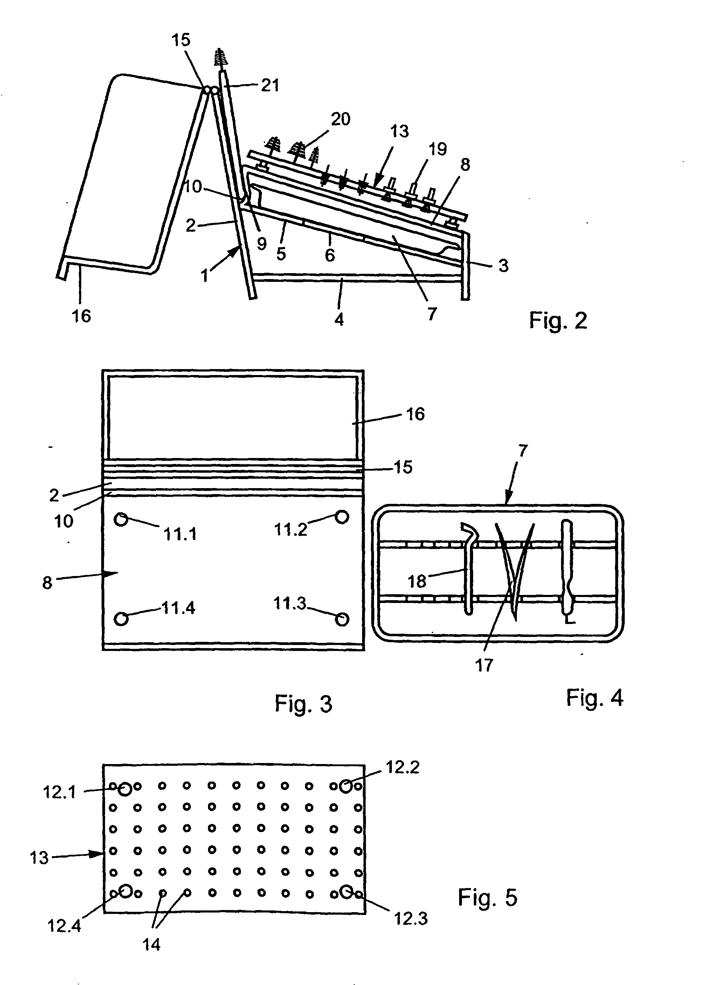

Ferner besitzt die Schrägplatte 8, wie in Figur 3 erkennbar, Stecklöcher 11.1 bis 11.4. Diese Stecklöcher 11.1 bis 11.4 dienen der Aufnahme von Steckfüssen 12.1 bis 12.4, welche einem Aufsatz 13 (siehe Figur 5) angeformt sind. In diesem Aufsatz 13 befinden sich eine Mehrzahl von Bohrungen 14 in Reihe und zueinander beabstandet.

Insbesondere in Figur 2 ist erkennbar, dass die Rückwand 2 wesentlich höher ausgestaltet ist, als die Frontwand 3. An ihrem oberen Ende besitzt die Rückwand 2 ein Scharnier 15, über welches ein Deckel 16 mit der Rückwand 2 verbunden ist.

Die Funktionsweise der vorliegenden Erfindung ist folgende:

Die Besteckschale 7 wird, wie in Figur 4 gezeigt, mit diversen dentalen Gerätschaften bestückt. Hierzu gehört eine Pinzette 17 und ein Halter 18 für interdentale Bürstenköpfe 19. Diese Bürstenköpfe 19 befinden sich in Bohrungen 14 in dem Aufsatz 13, wobei der Bürstenkopf 19 so geformt ist, dass er ein Einsteckteil zum Einsetzen in ein nicht näher gezeigtes Sackloch in dem Halter 18 aufweist. Zum Entnehmen des Bürstenkopfes 19 aus dem Einsatz 13 wird der Halter 18 mit dem Sackloch über das Steckteil des Bürstenkopfes 19 geführt und durch eine Vierteldrehung der Bürstenkopf in dem Halter 18 festgelegt. Nunmehr kann der Bürstenkopf 19 aus dem Aufsatz 13 gezogen werden. Das Ganze geschieht mit nur einer Hand.

Insgesamt wird die Besteckschale 7 in das Fach zwischen der Zwischenplatte 5 und der Schrägplatte 8 eingeschoben. Der Aufsatz 13 ist bereits mit interdentalen Bürsten bestückt. Hierzu gehören zum einen die Bürstenköpfe 19, zum anderen aber auch Drahtbürsten 20, welche in einen einfach geformten Griff 21 eingeführt werden können. Hierbei sind Drahtbürsten 20 unterschiedlichster Dicke für unterschiedlichste Zahnzwischenräume vorgesehen. Erfindungsgemäss hat jede Bürstendicke ihre eigene Farbe, so dass für einen bestimmten Patienten immer die richtige Bürstendicke ausgesucht wird. Dabei ist es möglich, dass entweder die Borsten und/oder aber auch der Draht farbig unterschiedlich gefärbt sein kann. Ferner ist es möglich, eine unterschiedliche Drahtdicke zu wählen.

Ein derartiger Aufsatz 13, bestückt mit Drahtbürsten 20 und Bürstenköpfen 19, wird auf die Schrägplatte 8 aufgesetzt, wobei die Steckfüsschen 12.1 bis 12.4 in die Stecklöcher 11.1 bis 11.4 eingreifen.

In die Mulde 10 hinter der Schrägplatte 8 werden unterschiedlich eingefärbte Griffe 21 zur Aufnahme der Drahtbürsten 20 eingesetzt. Die Farbe der Griffe 21 stimmt bevorzugt mit der Farbe der Drahtbürsten überein, so dass auch hier immer für einen bestimmten Patienten die richtige Drahtbürste 20 mit Griff 21 gewählt wird.

Die gesamte Anordnung wird über den Deckel 16 geschützt, der so um das Scharnier 15 gedreht werden kann, dass er den Aufsatz 13 übergreift.

| **Positionszahlenliste** | | | | | |
|---|---|---|---|---|---|
| 1 | Grundgestell | 34 | | 67 | |
| 2 | Rückwand | 35 | | 68 | |
| 3 | Frontwand | 36 | | 69 | |
| 4 | Boden | 37 | | 70 | |
| 5 | Zwischenplatte | 38 | | 71 | |
| 6 | Ausnehmung | 39 | | 72 | |
| 7 | Besteckschale | 40 | | 73 | |
| 8 | Schrägplatte | 41 | | 74 | |
| 9 | S-förmige Ausformung | 42 | | 75 | |
| 10 | Mulde | 43 | | 76 | |
| 11 | Stecklöcher | 44 | | 77 | |
| 12 | Steckfüsse | 45 | | 78 | |
| 13 | Aufsatz | 46 | | 79 | |
| 14 | Bohrung | 47 | | | |
| 15 | Scharnier | 48 | | | |
| 16 | Deckel | 49 | | | |
| 17 | Pinzette | 50 | | | |
| 18 | Halter | 51 | | | |
| 19 | Bürstenkopf | 52 | | | |
| 20 | Drahtbürsten | 53 | | | |
| 21 | Griff | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. vorrichtung zum Darbieten von Gerätschaften der Dentalhygiene, insbesondere von Pflegegerätschaften (19, 20) für die interdentale Hygiene in einem Grundgestell (1),
**dadurch gekennzeichnet,**
**dass** auf dem Grundgestell (1) ein Aufsatz (13) angeordnet ist, welcher eine Mehrzahl unterschiedlicher Bürsten (19, 20) trägt und der austauschbar auf dem Grundgestell (1) angeordnet ist.

2. Vorrichtung nach Anspruch 1, **dadurch gekennzeichnet, dass** Bürsten (19, 20) unterschiedlicher Stärke mit unterschiedlichen Farben gekennzeichnet sind.

3. Vorrichtung nach Anspruch 2, **dadurch gekennzeichnet, dass** für jede Bürstendicke eine unterschiedliche Drahtdicke und/oder Drahtfarbe vorgesehen ist.

4. Vorrichtung nach einem der Ansprüche 1 bis 3, **dadurch gekennzeichnet, dass** der Aufsatz (13) Stückfüsse (12.1 bis 12.4) aufweist, denen entsprechend Stecklöcher (11.1 bis 11.4) in einer Schrägplatte (8) zugeordnet sind.

5. Vorrichtung nach Anspruch 4, **dadurch gekennzeichnet, dass** hinter der Schrägplatte (8) Bürsten (20) mit Griff (21) angeordnet sind.

6. Vorrichtung nach Anspruch 5, **dadurch gekennzeichnet, dass** zwischen der Schrägplatte (8) und einer Rückwand (2) eine Mulde (10) für die Bürsten (20) mit Griff (21) vorgesehen ist.

7. Vorrichtung nach Anspruch 5 oder 6, **dadurch gekennzeichnet, dass** die Farbe des Griffes (21) mit derjenigen des Drahtes bzw. der Bürste (20) übereinstimmt.

8. Vorrichtung nach wenigstens einem der Ansprüche 1 bis 7, **dadurch gekennzeichnet, dass** das Grundgestell (1) und insbesondere der Aufsatz (13) mittels eines Deckels (16) abdeckbar ist.

9. Vorrichtung nach Anspruch 8, **dadurch gekennzeichnet, dass** der Deckel (16) über ein Scharnier (15) mit der Rückwand (2) verbunden ist.

10. Vorrichtung nach wenigstens einem der Ansprüche 4 bis 9, **dadurch gekennzeichnet, dass** unter der Schrägplatte (8) durch eine weitere schräge Zwischenplatte (5) ein Fach zur Aufnahme einer Besteckschale (7) ausgebildet ist.

## Claims

1. Apparatus for displaying instruments for dental hygiene, more especially care instruments (19, 20) for interdental hygiene in a basic frame (1), **characterised in that** a top structure (13) is disposed on the basic frame (1), which top structure carries a plurality of different brushes (19, 20) and is interchangeably disposed on the basic frame (1).

2. Apparatus according to claim 1, **characterised in that** brushes (19, 20) of different thicknesses are denoted by different colours.

3. Apparatus according to claim 2, **characterised in that** a different wire thickness and/or wire colour are/is provided for each brush thickness.

4. Apparatus according to one of claims 1 to 3, **characterised in that** the top structure (13) has insertable feet (12.1 to 12.4), which have plug-in holes (11.1 to 11.4) appropriately associated therewith in a sloping plate (8).

5. Apparatus according to claim 4, **characterised in that** brushes (20) with handles (21) are disposed behind the sloping plate (8).

6. Apparatus according to claim 5, **characterised in that**, between the sloping plate (8) and a rear wall (2), a trough (10) is provided for the brushes (20) with handles (21).

7. Apparatus according to claim 5 or 6, **characterised in that** the colour of the handle (21) coincides with that of the wire or respectively of the brush (20).

8. Apparatus according to at least one of claims 1 to 7, **characterised in that** the basic frame (1) and, more especially, the top structure (13) are coverable by means of a lid (16).

9. Apparatus according to claim 8, **characterised in that** the lid (16) is connected to the rear wall (2) via a hinge (15).

10. Apparatus according to at least one of claims 4 to 9, **characterised in that** a compartment for accommodating a dish for accessories (7) is provided beneath the sloping plate (8) by an additional sloping intermediate plate (5).

## Revendications

1. Dispositif de présentation d'instruments pour l'hygiène dentaire, en particulier d'instruments de soins (19, 20) pour l'hygiène interdentaire, dans un bâti de base (1),
**caractérisé par le fait que**
sur le bâti de base (1) est disposé un couronnement (13) portant une pluralité de brosses (19, 20) différentes et qui est disposé de manière échangeable sur le bâti de base (1).

2. Dispositif selon la revendication 1, **caractérisé par le fait que** les brosses (19, 20) d'épaisseur différente sont **caractérisées par** des couleurs différentes.

3. Dispositif selon la revendication 2, **caractérisé par le fait que** pour chaque épaisseur de brosse est prévue une épaisseur de fil et/ou une couleur de fil différente.

4. Dispositif selon l'une des revendications 1 à 3, **caractérisé par le fait que** le couronnement (13) présente des pieds de pièces (12.1 à 12.4) conformément auxquels sont associés des trous d'enfoncement (11.1 à 11.4) dans une plaque oblique (8).

5. Dispositif selon la revendication 4, **caractérisé par le fait que** derrière la plaque oblique (8) sont disposées des brosses (20) à poignée (21).

6. Dispositif selon la revendication 5, **caractérisé par le fait qu'**entre la plaque oblique (8) et une paroi arrière (2) est prévue une auge (10) pour les brosses (20) à poignée (21).

7. Dispositif selon la revendication 5 ou 6, **caractérisé par le fait que** la couleur de la poignée (21) coïncide avec celle du fil ou de la brosse (20).

8. Dispositif selon au moins l'une des revendications 1 à 7, **caractérisé par le fait que** le bâti de base (1), et en particulier le couronnement (13), peut être recouvert au moins d'un couvercle (16).

9. Dispositif selon la revendication 8, **caractérisé par le fait que** le couvercle (16) est connecté à la paroi arrière (2) par l'intermédiaire d'une charnière (15).

10. Dispositif selon au moins l'une des revendications 4 à 9, **caractérisé par le fait que** sous la plaque oblique (8) est formé, par une autre plaque intermédiaire oblique (5), un casier destiné à recevoir un plateau à instruments (7).
